# EUROPEAN PATENT APPLICATION

(11) **EP 3 236 646 A1**
(43) Date of publication of application: **25.10.2017**
(21) Application number: 15868866.3
(22) Date of filing: 12.03.2015
(51) Int. Cl.: H04M 3/50, H04L 12/66, H04L 12/28, H04M 3/493

(54) **IVR SERVICE REALIZATION METHOD OF HOME GATEWAY, AND HOME GATEWAY**

(30) Priority: 19.12.2014 CN 201410803344
(71) Applicant: ZTE Corporation, Shenzhen, Guangdong 518057 (CN)
(72) Inventor: JIANG, Hongbin, Shenzhen Guangdong 518057 (CN); ZHU, Wenhua, Shenzhen Guangdong 518057 (CN); WANG, Bo, Shenzhen Guangdong 518057 (CN); ZHANG, Penggang, Shenzhen Guangdong 518057 (CN); JIANG, Heng, Shenzhen Guangdong 518057 (CN)
(74) Representative: Novagraaf Technologies
(86) International application number: PCT/CN2015/074133
(87) International publication number: WO 2016/095349

(57) **Abstract**

A method for a home gateway to realize an Interactive Voice Response (IVR) service and a home gateway are provided. The method includes that: when a voice user belonging to a home gateway serves as a called user, the home gateway provides an IVR prompt to a calling user, so that the calling user makes an IVR service request according to the IVR prompt; and the home gateway receives the IVR service request, and performs an IVR service operation corresponding to the IVR service request. The present disclosure satisfies multi-level service requirements of a home user.

## Description

### Technical Field

The present disclosure relates to the communication field, in particular to a method for a home gateway to realize an Interactive Voice Response (IVR) service and a home gateway.

### Background

In the home broadband communication access, whether the way of access to home is optical fiber, Digital Subscriber Line (xDSL), cable, power line or wireless way, the home gateway can provide a data service and a voice service to an internal user at the same time.

At present, if a Next Generation Network (NGN) home user wants to provide a specified service for an external incoming call or realize smart home control through an automatic voice response mode, it is necessary to externally connect an IVR dedicated device through a Foreign Exchange Station (FXS) interface of the home gateway, and the IVR dedicated device provides automatic response, and determines the specified provided service according to a dial tone in the incoming call, for example, "please dial X to fax, please dial Y to transfer a call, please dial Z to leave a message, and so on".

However, externally connecting the IVR dedicated device will increase the acquisition cost of the home user, and is relatively complicated in providing common IVR services for the home user. Besides, when it is needed to control or interwork integrated services of the home gateway itself, the process of externally connecting the IVR dedicated device is complicated, and there is no specification and interface with unified standard.

### Summary

The present disclosure mainly aims to provide a method for a home gateway to realize an IVR service and a home gateway, so as to reduce the cost for a home user to realize an IVR function, simplify an IVR service flow, and facilitate the control of integrated services of the home gateway itself.
according to one aspect of the present disclosure, an embodiment provides a method for a home gateway to realize an IVR service, which includes that: when a voice user belonging to a home gateway serves as a called user, the home gateway provides an IVR prompt to a calling user, so that the calling user makes an IVR service request according to the IVR prompt; and the home gateway receives the IVR service request, and performs an IVR service operation corresponding to the IVR service request.

The step of the home gateway providing the IVR prompt to the calling user includes: the home gateway feeds back the IVR prompt to the calling user while playing a predefined voice file to the calling user, wherein the IVR prompt is that: different dial key tones correspond to different IVR service requests; the IVR service requests include: making a home phone ring, receiving a fax, or receiving a message.

When the IVR service request is making the home phone ring, that the home gateway performs the IVR service operation corresponding to the IVR service request includes that: the home gateway makes the home phone ring, and if the voice user does not answer, sends information of the missed call to a default mailbox/default short message number preset by the voice user through a mail/short message, so as to prompt the voice user to extract the information of the missed call in time, wherein the information of the missed call includes: caller ID and call time.

When the IVR service request is receiving a fax, that the home gateway performs the IVR service operation corresponding to the IVR service request includes that: the home gateway receives an incoming fax, and saves fax information, wherein the fax information includes: caller ID, call time and fax content; the home gateway sends the fax information to the default mailbox preset by the voice user through a mail, so as to prompt the voice user to extract the fax information in time.

When the IVR service request is receiving a message, that the home gateway performs the IVR service operation corresponding to the IVR service request includes that: the home gateway receives and saves message information, wherein the message information includes: caller ID, call time and message content; the home gateway sends the message information to the default mailbox preset by the voice user through a mail, so as to prompt the voice user to extract the message information in time.

The predefined voice file, and a corresponding relationship between the dial key tone and the IVR service request can be configured in the following way: configuring through a Web interface, an Ethernet interface, a WIFI interface, and a serial port of the home gateway; or, configuring through a dial key of the home phone.

The method further includes that: according to user's need, the home gateway controls enabling or disabling a physical connection between a home internal network and an external network.

The types of the home gateway include: an uplink home access gateway based on the LAN technology, an uplink home access gateway based on the xDSL technology, an uplink home access gateway based on the xPON technology, an uplink home access gateway based on the cable technology, an uplink home access gateway based on the power line, or an uplink home access gateway based on the wireless technology.

According to another aspect of the present disclosure, an embodiment also provides a home gateway, which includes: a providing module, which is configured to, when the voice user belonging to the home gateway serves as the called user, provide the IVR prompt to the calling user, so that the calling user makes the IVR service request according to the IVR prompt; and a processing module, which is configured to receive the IVR service request, and perform the IVR service operation corresponding to the IVR service request.

The processing module includes: a processing unit, which is configured to feed back the IVR prompt to the calling user while playing the predefined voice file to the calling user, wherein the IVR prompt is that: different dial key tones correspond to different IVR service requests; the IVR service requests include: making a home phone ring, receiving a fax, or receiving a message.

The home gateway further includes: a controlling module, which is configured to control enabling or disabling the physical connection between the home internal network and the external network.

The types of the home gateway include: the uplink home access gateway based on the LAN technology, the uplink home access gateway based on the xDSL technology, the uplink home access gateway based on the xPON technology, the uplink home access gateway based on the cable technology, the uplink home access gateway based on the power line, or the uplink home access gateway based on the wireless technology.

Compared with the prior art, by using in the home gateway a System on Chip (SoC) resource or a Digital Signal Process (DSP) resource existing in a home gateway system to realize a built-in IVR function, a method for a home gateway to realize an IVR service and a home gateway of the present disclosure enable a home user to realize the IVR service without need of externally connecting an IVR device, thereby satisfying multi-level service requirements of the home user.

### Brief Description of the Drawings

Fig. 1 is a flowchart of a method for a home gateway to realize an IVR service according to an embodiment of the present disclosure;
Fig. 2 is a structure diagram of a home gateway according to an embodiment of the present disclosure;
Fig. 3 is a structure diagram of an optional home gateway according to an embodiment of the present disclosure;
Fig. 4 is a structure diagram of a home gateway according to an optional embodiment of the present disclosure;
Fig. 5 is a flowchart of realizing an IVR functional service according to an optional embodiment of the present disclosure; and
Fig. 6 is a flowchart of managing personal settings according to an optional embodiment of the present disclosure.

### Detailed Description of the Embodiments

The technical solutions in the embodiments of the present disclosure are clearly and completely described below in combination with the accompanying drawings. Obviously, the described embodiments are only a part of the embodiments of the present disclosure but not all. Based on the embodiments of the present disclosure, all the other embodiments obtained by the ordinary skill in the art on the premise of not contributing creative effort belong to the scope of protection of the present disclosure.

Aiming at the problem in prior art that the realization process of using an externally connected IVR dedicated device to provide common IVR services for the home user and control or interwork integrated services of the home gateway itself is relatively complicated, the present disclosure puts forward solution ideas as follows: if the home gateway has no need to externally connect the IVR dedicated device, but can solve the above problem by realizing an IVR function, furthermore, it is possible to develop some new home gateway services to satisfy special service requirements of the home user; for example, enabling or disabling a physical connection between a home internal network and an external network is controlled by means of the IVR function integrated in the home gateway, and the user can configure the IVR functions, including notifying a missed call through a mail or a short message, by means of personal settings of the IVR function integrated in the home gateway.

Based on the above ideas, the embodiment of the present disclosure provides the following technical solutions.

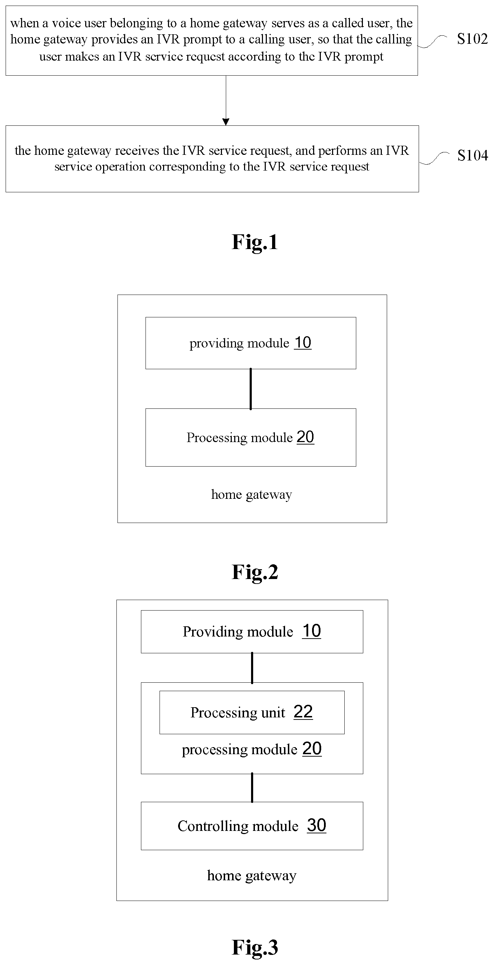

The embodiment of the present disclosure provides a method for a home gateway to realize an IVR service. Fig. 1 is a flowchart of a method for a home gateway to realize an IVR service according to an embodiment of the present disclosure; as shown in Fig. 1, the flow includes the following steps (S102 and S104):
S102: when a voice user belonging to a home gateway serves as a called user, the home gateway provides an IVR prompt to a calling user, so that the calling user makes an IVR service request according to the IVR prompt; and
S104: the home gateway receives the IVR service request, and performs an IVR service operation corresponding to the IVR service request.

Through the above steps, the function of the externally connected IVR dedicated device is integrated in the home gateway; when the home user is called, the home gateway only needs to perform IVR interaction with the calling user and provide the corresponding IVR service to the calling user, so that the complexity of the realization process of the traditional externally connected IVR dedicated device can be simplified.

In some embodiments, in S102, when the home gateway provides the IVR prompt to the calling user, it can be realized in such a way: the home gateway feeds back the IVR prompt to the calling user while playing a predefined voice file to the calling user, wherein the IVR prompt is that: different dial key tones correspond to different IVR service requests; the IVR service requests include: making a home phone ring, receiving a fax, or receiving a message.

The traditional home gateway is a device connecting an external broadband network with a home internal network, so as to realize exchange between home internal information and home external information; the home gateway connects the broadband network of operators externally, and provides home broadband and voice interface for the home user internally, thereby satisfying home data and voice service requirements. However, when the home user needs to use the IVR service, it is needed to externally connect an IVR dedicated device to the home gateway, as described above, the disadvantage of such a way is obvious.

Based on this, SoC resources or DSP resources existing in the home gateway system and the corresponding processing capacity are used to improve the home gateway, so that the IVR function of the IVR dedicated device can be realized on the home gateway; in such a manner, the home gateway feeds back the IVR prompt to the calling user while playing the predefined voice file to the calling user.

Certainly, the improvement is not just simply transferring the function of the IVR dedicated device to the home gateway, because the hardware structure and resource of the home gateway are different from that of the IVR dedicated device, it is impossible to realize the function by simply copying or transferring; in the embodiment of the present disclosure, the SoC or DSP hardware resources in the home gateway are used in combination, so as to increase the corresponding processing capacity of processing the IVR service, and it is needed to perform cooperative processing on the IVR service and other services of the home gateway; for example, in what circumstances the IVR service is processed preferentially, and in what circumstances the other services are processed, all these need comprehensive processing.

The flows of performing corresponding services to different IVR services are described below.
(1) When the IVR service request is making the home phone ring, the home gateway can perform the IVR service operation corresponding to the IVR service request in this way: the home gateway makes the home phone ring, and if the voice user does not answer, sends information of the missed call to a default mailbox/default short message number preset by the voice user through a mail/short message, so as to prompt the voice user to extract the information of the missed call in time, wherein the information of the missed call includes: caller ID and call time.
(2) When the IVR service request is receiving a fax, the home gateway can perform the IVR service operation corresponding to the IVR service request in this way: the home gateway receives an incoming fax, and saves fax information, wherein the fax information includes: caller ID, call time and fax content; the home gateway sends the fax information to the default mailbox preset by the voice user through a mail, so as to prompt the voice user to extract the fax information in time.
(3) When the IVR service request is receiving a message, the home gateway can perform the IVR service operation corresponding to the IVR service request in this way: the home gateway receives and saves message information, wherein the message information includes: caller ID, call time and message content; the home gateway sends the message information to the default mailbox preset by the voice user through a mail, so as to prompt the voice user to extract the message information in time.

In some embodiments, the predefined voice file, and a corresponding relationship between the dial key tone and the IVR service request can be configured in the following way: configuring through a Web interface, an Ethernet interface, a WIFI interface, and a serial port of the home gateway; or, configuring through a dial key of the home phone.

In some embodiments, when the user needs to disable or enable the connection between the internal network and the external network of the home gateway because of some special reasons, the home gateway can also control enabling or disabling the physical connection between the home internal network and external network according to user's need.

In some embodiments, the types of the home gateway include: the uplink home access gateway based on the LAN technology, the uplink home access gateway based on the xDSL technology, the uplink home access gateway based on the xPON technology, the uplink home access gateway based on the cable technology, the uplink home access gateway based on the power line, or the uplink home access gateway based on the wireless technology.

Corresponding to the method for a home gateway to realize an IVR service, the embodiment of the present disclosure also provides a home gateway, which is used for performing the method for a home gateway to realize an IVR service. Fig. 2 is a structure diagram of a home gateway according to an embodiment of the present disclosure; as shown in Fig. 2, the home gateway includes: a providing module 10 and a processing module 20, wherein
the providing module 10 is configured to, when the voice user belonging to the home gateway serves as the called user, provide the IVR prompt to the calling user, so that the calling user makes the IVR service request according to the IVR prompt; and the processing module 20 is configured to receive the IVR service request, and perform the IVR service operation corresponding to the IVR service request.

Based on the home gateway shown in Fig. 2, the embodiment of the present disclosure also provides an optional home gateway. Fig. 3 is a structure diagram of an optional home gateway according to an embodiment of the present disclosure; as shown in Fig. 3, in the optional home gateway,
the processing module 20 may further include: a processing unit 22, which is configured to feed back the IVR prompt to the calling user while playing the predefined voice file to the calling user, wherein the IVR prompt is that: different dial key tones correspond to different IVR service requests; the IVR service requests include: making a home phone ring, receiving a fax, or receiving a message.

The home gateway may also include: a controlling module 30, which is configured to control enabling or disabling the physical connection between the home internal network and the external network.

In the present embodiment, the types of the home gateways shown in Fig. 2 or Fig. 3 include the followings: the uplink home access gateway based on the LAN technology, the uplink home access gateway based on the xDSL technology, the uplink home access gateway based on the xPON technology, the uplink home access gateway based on the cable technology, the uplink home access gateway based on the power line, or the uplink home access gateway based on the wireless technology.

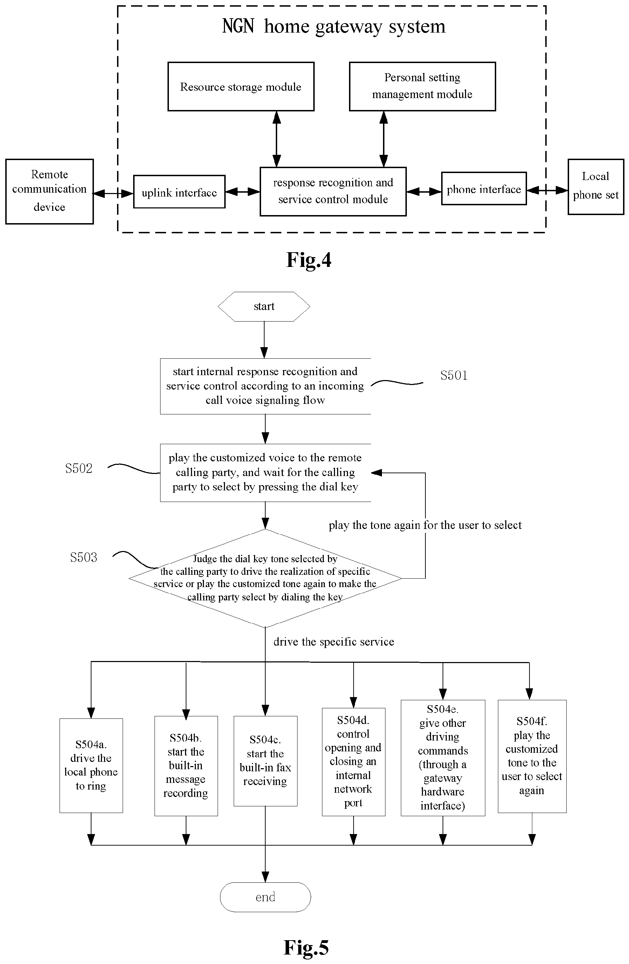

In order to facilitate understanding the implementation process of the above embodiment, a more detailed elaboration is provided below in combination with Fig. 4, Fig. 5 and an optional embodiment.

### Exemplary embodiment

Fig. 4 is a structure diagram of a home gateway according to an optional embodiment of the present disclosure; refer to Fig. 4, the implementation process of the optional embodiment is described below in combination with Fig. 4.

In the home gateway system as an example of the optional embodiment, a response recognition and service control module, a resource storage module, and a personal setting management module (note that, these modules are functional modules, although their names are different from the names of the functional modules in the above embodiment, and even they are partly overlapped on function, the finally realized IVR services are the same) are added. In the optional embodiment, the home gateway system is an integrated system product taking the home gateway as the core voice function, and the implementation of its realization process (including software code) can absolutely take the various types of gateways as hardware basis.

An uplink interface shown in Fig. 4 uses one of uplink technologies corresponding to the various types of home gateways, and is used for connecting a remote communication device (a physical communication device outside family); a phone interface shown in Fig. 4 is used for connecting a local phone (the phone within family).

In the realizing process of the optional embodiment, the response recognition and service control module is configured to, when the voice user belonging to the home gateway serves as the called user, recognize a dial key number tone selected by the calling user, judge and process the next operation (including playing a customized play tone to the calling user, providing the next voice prompt and waiting for a new calling side to dial, or sending a specific service control operation instruction to the local home gateway), and finally realize the built-in IVR services; these services include: driving the home gateway to make the home phone ring, or taking the home gateway as a fax receiver to receive and record an incoming fax, or taking the home gateway as a message recording device to store the message of an incoming call.

That is, a message leaving function of an answering phone and a fax receiving function of a fax machine are built in the home gateway, and the selection and realization of these services in the home gateway is realized through the IVR mode (which is equivalent to developing some new home gateway services), so as to satisfy some special requirements of the home user; specifically, the realization processes of these services include the followings.
(1) The missed call is notified through a mail or short message; after the incoming call is not answered, the number and time of the missed call are pushed to the default mailbox or default short message number set by the user, so that the user can extract the information in time.
(2) The message of the missed call is notified through a mail; after the incoming call leaves a message, the incoming call number, time and message content are pushed to the default mailbox set by the user, so that the user can extract the information in time.
(3) The incoming fax is notified through a mail; after the incoming call sends a fax, the incoming call number, time and a fax content file are pushed to the default mailbox set by the user, so that the user can extract the information in time.
(4) The processing performed on a voice call by the response recognition and service control module may further include: controlling enabling or disabling the physical connection between the home internal network and the external network, and ensuring that the home internal network can enable or disable the physical connection with outside through an external call in emergency; especially for the wide use of home storage, it is physically insecure to connect with the external network through the internal network; in such a manner, the security of the home internal network can be ensured.

The resource storage module is configured to store customized play tone resource aiming at the IVR, resource of incoming call message, content of incoming fax and resources of other service files of the home gateway, and manage related storage of these resources. When the response recognition and service control module is started, it finds from the resource storage module the corresponding resource of customized play tone to call the corresponding voice file, and then plays the voice file to the calling user.

The personal setting managing module is configured to complete the setting of personal information of the user, including: management of personal information configuration, wherein the personal information configuration can be setting of information like a personal mailbox needed by pushing a mail and a short message; the personalized management of the IVR customized service is making the user check or configure the personally needed specific IVR service on a default IVR function list provided by the device; the personalized management of the customized play tone is providing the user with functions of recording, modifying or deleting the customized voice file and setting the corresponding relationship between the dial key number of the calling user and the resource of customized play tone; the upload and related management of a customized play tone file can be performed through the Web interface, the Ethernet interface, the WIFI interface, and the serial port of the home gateway, or the upload and related management of the customized play tone file can be performed by the home user through the dial key and the tone key of the dialing phone; the personalized management of other service files can enable the user to extract or delete the fax and message through the Web interface, the Ethernet interface and the serial port.

The process that the home gateway realizes the IVR functional service is described below by taking that the home gateway system shown in Fig. 4 is a software and hardware architecture, the remote (outside family) physical phone is a calling party, and the local home gateway is a voice call receiving party for example.

Fig. 5 is a flowchart of realizing an IVR functional service according to an optional embodiment of the present disclosure; as shown in Fig. 5, the flow includes the following steps:
S501: start internal response recognition and service control according to an incoming call voice signaling flow;
S502: play the customized voice to the remote calling party, and wait for the calling party to select by pressing the dial key;
S503: judge the dial key tone selected by the calling party to drive the realization of specific service or play the customized tone again to make the calling party select by dialing the key; according to the number dialed by the calling party, the following processing is selected;
S504a: drive the local phone to ring;
S504b: start the built-in message recording;
S504c: start the built-in fax receiving;
S504d: control opening and closing an internal network port;
S504e: give other driving commands (through a gateway hardware interface); and
S504f: play the customized tone to the user to select again.

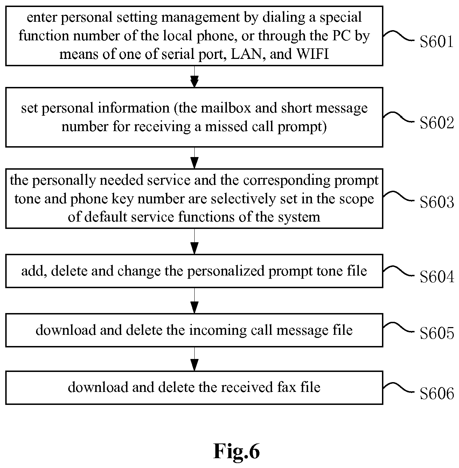

Fig. 6 is a flowchart of managing personal settings according to an optional embodiment of the present disclosure; as shown in Fig. 6, the flow includes the following steps:
S601: enter personal setting management by dialing a function number of the local phone, or through the PC by means of one of serial port, LAN, and WIFI;
S602: set personal information (the mailbox and short message number for receiving a missed call prompt); if the personal setting is managed through the common phone, only a part of the person information like the short message number can be set, and the mailbox cannot be set; if the personal setting is managed in other ways, all of the person information can be set;
S603: the personally needed service and the corresponding prompt tone and phone key number are selectively set in the scope of default service functions of the system;
S604: add, delete and change the personalized prompt tone file;
S605: download and delete the incoming call message file; and
S606: download and delete the received fax file.

Through the above optional embodiments, the IVR service function of the externally connected IVR dedicated device is built in the home gateway based on the SoC resource or DSP resource existing in the home gateway system and the corresponding processing capacity, so that the home user can realize these IVR services without need of externally connecting the IVR dedicated device. At the same time, some new home gateway services (including enabling or disabling the physical connection between the home internal network and the external network by control, notifying the missed call through the mail or short message, and notifying the message of the incoming call and the incoming fax), so that some special requirements of the home user are satisfied.

The above is the optional embodiments of the present disclosure; it should be indicated that, on the premise of not departing from the conception of the present disclosure, those ordinary skill in the art may also make a number of modifications and improvements which fall within the scope of the present disclosure.

### Industrial Applicability

The present disclosure relates to a method for a home gateway to realize an IVR service and a home gateway; by using in the home gateway the SoC resource or the DSP resource existing in the home gateway system to realize the built-in IVR function, the home user can realize the IVR service without need of externally connecting the IVR device, thereby satisfying multi-level service requirements of the home user.

## Claims

1. A method for a home gateway to realize an Interactive Voice Response (IVR) service, comprising:
when a voice user belonging to a home gateway serves as a called user, providing, by the home gateway, an IVR prompt to a calling user, so that the calling user makes an IVR service request according to the IVR prompt; and
receiving, by the home gateway, the IVR service request, and performing an IVR service operation corresponding to the IVR service request.

2. The method as claimed in claim 1, wherein providing, by the home gateway, the IVR prompt to the calling user comprises:
feeding back, by the home gateway, the IVR prompt to the calling user while playing a predefined voice file to the calling user, wherein the IVR prompt is that: different dial key tones correspond to different IVR service requests; the IVR service requests comprise: making a home phone ring, receiving a fax, or receiving a message.

3. The method as claimed in claim 2, wherein when the IVR service request is making the home phone ring, performing, by the home gateway, the IVR service operation corresponding to the IVR service request comprises:
making, by the home gateway, the home phone ring, and if the voice user does not answer, sending information of the missed call to a default mailbox/default short message number preset by the voice user through a mail/short message, so as to prompt the voice user to extract the information of the missed call in time, wherein the information of the missed call comprises: caller ID and call time.

4. The method as claimed in claim 2, wherein when the IVR service request is receiving a fax, performing, by the home gateway, the IVR service operation corresponding to the IVR service request comprises:
receiving, by the home gateway, an incoming fax, and saving fax information, wherein the fax information comprises: caller ID, call time and fax content;
sending, by the home gateway, the fax information to the default mailbox preset by the voice user through a mail, so as to prompt the voice user to extract the fax information in time.

5. The method as claimed in claim 2, wherein when the IVR service request is receiving a message, performing, by the home gateway, the IVR service operation corresponding to the IVR service request comprises:
receiving and saving, by the home gateway, message information, wherein the message information comprises: caller ID, call time and message content;
sending, by the home gateway, the message information to the default mailbox preset by the voice user through a mail, so as to prompt the voice user to extract the message information in time.

6. The method as claimed in any one of claims 2 to 5, wherein the predefined voice file, and a corresponding relationship between the dial key tone and the IVR service request can be configured in the following way:
configuring through a Web interface, an Ethernet interface, a WIFI interface, and a serial port of the home gateway; or,
configuring through a dial key of the home phone.

7. The method as claimed in claim 6, further comprising:
according to user's need, controlling, by the home gateway, enabling or disabling a physical connection between a home internal network and an external network.

8. The method as claimed in claim 6, wherein the types of the home gateway comprise:
an uplink home access gateway based on the LAN technology, an uplink home access gateway based on the Digital Subscriber Line (xDSL) technology, an uplink home access gateway based on the xPON technology, an uplink home access gateway based on the cable technology, an uplink home access gateway based on the power line, or an uplink home access gateway based on the wireless technology.

9. A home gateway, comprising:
a providing module, which is configured to, when a voice user belonging to a home gateway serves as a called user, provide an IVR prompt to a calling user, so that the calling user makes an IVR service request according to the IVR prompt; and
a processing module, which is configured to receive the IVR service request, and perform an IVR service operation corresponding to the IVR service request.

10. The home gateway as claimed in claim 9, wherein the processing module comprises:
a processing unit, which is configured to feed back the IVR prompt to the calling user while playing a predefined voice file to the calling user, wherein the IVR prompt is that: different dial key tones correspond to different IVR service requests; the IVR service requests comprise: making a home phone ring, receiving a fax, or receiving a message.

11. The home gateway as claimed in claim 9, further comprising:
a controlling module, which is configured to control enabling or disabling a physical connection between a home internal network and an external network.

12. The home gateway as claimed in any one of claims 9 to 11, wherein the types of the home gateway comprise:
an uplink home access gateway based on the LAN technology, an uplink home access gateway based on the Digital Subscriber Line (xDSL) technology, an uplink home access gateway based on the xPON technology, an uplink home access gateway based on the cable technology, an uplink home access gateway based on the power line, or an uplink home access gateway based on the wireless technology.
